# EUROPÄISCHE PATENTSCHRIFT

(11) **EP 3 363 679 B1**
(45) Veröffentlichungstag und Bekanntmachung des Hinweises auf die Patenterteilung: **21.08.2019**
(21) Anmeldenummer: 17157062.5
(22) Anmeldetag: 21.02.2017
(51) Int. Cl.: B60N 2/00, A47C 31/12

(54) **VERFAHREN ZUR FESTSTELLUNG WENIGSTENS EINER SITZHALTUNG DES BENUTZERS EINER SITZVORRICHTUNG AUF DER SITZVORRICHTUNG**
METHOD FOR THE DETERMINATION OF AT LEAST ONE POSTURE OF THE USER OF A SEATING DEVICE ON THE SEATING DEVICE
PROCÉDÉ POUR DÉTERMINATION D'AU MOINS UNE POSTURE DE CORPS D'UN UTILISATEUR D'UN DISPOSITIF DE SIÈGE SUR CE SIÈGE

(43) Veröffentlichungstag der Anmeldung: 22.08.2018
(73) Patentinhaber: RealThingks GmbH, 40668 Meerbusch (DE)
(72) Erfinder: Swetharanyam, Sugandar, 70435 Stuttgart (DE); Jakobsson, Peter, 40668 Meerbusch (DE)
(74) Vertreter: Berkenbrink, Kai-Oliver

(56) Entgegenhaltungen:
- WO-A2-03/072953
- US-A1- 2009 058 661
- US-A1- 2016 128 623

## Beschreibung

Die Erfindung betrifft ein Verfahren zur Feststellung wenigstens einer Sitzhaltung des Benutzers einer Sitzvorrichtung auf der Sitzvorrichtung sowie eine Vorrichtung zur Durchführung dieses Verfahrens.

Viele Personen verbringen regelmäßig viele Stunden auf Sitzvorrichtungen. Beispielsweise verbringen Personen, die in einem Büro arbeiten, regelmäßig viele Stunden auf einer Sitzvorrichtung in Form eines Bürostuhles. Ferner verbringen beispielsweise Personen, die häufig Fahrzeuge benutzen, regelmäßig viele Stunden auf einer Sitzvorrichtung in Form eines Fahrzeugsitzes.

Beim Sitzen auf der Sitzvorrichtung nehmen Personen eine Sitzhaltung ein, also eine bestimmte Haltung während des Sitzens auf der Sitzvorrichtung. Eine ergonomisch ungünstige Sitzhaltung kann jedoch die physische Beschaffenheit des Benutzers negativ beeinträchtigen, insbesondere bei dauerhafter Einnahme einer solch ergonomisch ungünstigen Sitzposition. So kann beispielsweise die Wirbelsäule einer Person geschädigt werden, wenn diese regelmäßig eine ergonomisch ungünstige Sitzhaltung auf einer Sitzvorrichtung einnimmt.

Es wäre daher wünschenswert, eine Technologie zur Feststellung der Sitzhaltung des Benutzers einer Sitzvorrichtung auf dieser Sitzvorrichtung zur Verfügung zu haben. Denn bei Vorliegen einer solchen Technologie wäre es möglich, eine festgestellte ergonomisch ungünstige Sitzhaltung an den Benutzer der Sitzvorrichtung oder sonstige Personen zu übermitteln, so dass der Benutzer seine ergonomisch ungünstige Sitzhaltung gegebenenfalls korrigieren kann.

Aus dem Stand der Technik sind Technologien bekannt, durch die feststellbar ist, ob eine Person auf einer Sitzvorrichtung Platz genommen hat. Eine solche Technologie ist beispielsweise für Fahrzeugsitze bekannt. Allerdings ist durch diese Technologie nur feststellbar, ob eine Person auf dem Fahrzeugsitz Platz genommen hat. Eine Sitzhaltung ist hierdurch nicht feststellbar.

Weiterhin sind Verfahren zur Feststellung einer Sitzhaltung einer Person auf einer Sitzvorrichtung nach US 2016/128623 A1, WO 03/072953 A2 und US 2009/058661 A1 bekannt.

Der Erfindung liegt die Aufgabe zugrunde, ein Verfahren zur Verfügung zu stellen, durch welches die Sitzhaltung des Benutzers einer Sitzvorrichtung auf der Sitzvorrichtung feststellbar ist. Eine weitere Aufgabe der Erfindung besteht darin, ein solches Verfahren zur Verfügung zu stellen, durch welches die Sitzhaltung besonders einfach feststellbar ist. Eine weitere Aufgabe der Erfindung besteht darin, ein solches Verfahren zur Verfügung zu stellen, durch welches die Sitzhaltung besonders zuverlässig feststellbar ist. Eine weitere Aufgabe der Erfindung besteht darin, ein solches Verfahren zur Verfügung zu stellen, durch welches eine ergonomisch ungünstige Sitzhaltung besonders zuverlässig feststellbar ist. Eine weitere Aufgabe der

Erfindung besteht darin, ein solches Verfahren zur Verfügung zu stellen, bei dem zur Feststellung der Sitzhaltung zuvor nicht individuelle Daten des Benutzers der Sitzvorrichtung erfasst und zur Verfügung gestellt werden müssen.

Erfindungsgemäß wird die Aufgabe gelöst durch ein Verfahren zur Feststellung der Sitzposition des Benutzers einer Sitzvorrichtung auf der Sitzvorrichtung, welche folgende Merkmale umfasst:
Erfassung der Größe einer physikalischen Eigenschaft an jedem Bereich einer Mehrzahl von Bereichen der Sitzvorrichtung, an denen diese Größe durch den Benutzer der Sitzvorrichtung beim Sitzen auf der Sitzvorrichtung veränderbar ist;
Bestimmung eines Wertes auf Basis der erfassten Größen;
Feststellung der Sitzhaltung des Benutzers unter Verwendung des Wertes, wobei der Wert bestimmt wird als ein Quotient der erfassten Größen.

Die Erfindung beruht auf der Grunderkenntnis, dass eine Person (nachfolgend auch "Benutzer"), die auf einer Sitzvorrichtung sitzt, beim Sitzen auf der Sitzvorrichtung an bestimmten Bereichen der Sitzvorrichtung die Größe von physikalische Eigenschaften ändert und aus diesen Änderungen der Größe der physikalischen Eigenschaften ein Wert bestimmbar ist, der charakteristisch ist für die Sitzhaltung der Person sind. Überraschend war dabei vor allem die erfindungsgemäße Erkenntnis, dass dieser Wert völlig unabhängig von der individuellen körperlichen Beschaffenheit des Benutzers ist. Die Grundidee der Erfindung besteht daher nunmehr darin, die Größe einer physikalischen Eigenschaft jeweils zumindest an einer Anzahl der Bereiche, an denen diese Größe durch den Benutzer der Sitzvorrichtung beim Sitzen auf der Sitzvorrichtung verändert wird, zu erfassen, auf Basis der erfassten Größen anschließend einen Wert zu bestimmen, der charakteristisch für die Sitzhaltung ist und anschließend die Sitzhaltung des Benutzers unter Verwendung dieses Wertes festzustellen.

Zur Durchführung des erfindungsgemäßen Verfahrens kann grundsätzlich eine beliebige Sitzvorrichtung zur Verfügung gestellt werden, beispielsweise ein Stuhl, Bürostuhl, Drehstuhl, Rollstuhl, Hocker, Sessel, Sofa, Fahrzeugsitz oder eine Bank. Die Sitzvorrichtung kann insbesondere eine Sitzfläche aufweisen, auf der der Benutzer der Sitzvorrichtung beim Sitzen auf der Sitzvorrichtung insbesondere mit seinem Gesäß und seinen beiden Oberschenkeln aufsitzt. Ferner kann die Sitzvorrichtung beispielsweise auch eine Rückenlehne aufweisen, an der der Benutzer der Sitzvorrichtung beim Sitzen auf der Sitzvorrichtung mit seinem Rücken anlehnen kann. Ferner kann die Sitzvorrichtung beispielsweise Armlehnen aufweisen, auf die die Unterarme des Benutzers der Sitzvorrichtung beim Sitzen auf der Sitzvorrichtung auflehnen können.

Bei der Art der physikalischen Eigenschaft, deren Größe bei der Durchführung des erfindungsgemäßen Verfahrens an einer Mehrzahl von Bereichen der Sitzvorrichtung erfasst wird, handelt es sich grundsätzlich um eine beliebige physikalische Eigenschaft, deren Größe durch den Benutzer der Sitzvorrichtung beim Sitzen auf der Sitzvorrichtung verändert beziehungsweise beeinflusst wird. Bei der Durchführung des erfindungsgemäßen Verfahrens wird demnach die Größe solcher physikalischen Eigenschaften der Sitzvorrichtung erfasst, die durch einen Benutzer der Sitzvorrichtung beim Sitzen auf der Sitzvorrichtung hinsichtlich ihrer verändert beziehungsweise beeinflusst wird, während der Benutzer auf der Sitzvorrichtung sitzt. Bei diesen physikalischen Eigenschaften kann es sich beispielsweise um eine oder mehrere der folgenden physikalischen Eigenschaften handeln: Druck, Temperatur oder Abstand. Erfindungsgemäß kann die Größe einer oder mehrerer dieser physikalischen Eigenschaften bei der Durchführung des erfindungsgemäßen Verfahrens erfasst werden.

Bei der physikalischen Eigenschaft "Druck" handelt es sich um den durch den Benutzer der Sitzvorrichtung beim Sitzen auf der Sitzvorrichtung auf die Sitzvorrichtung ausgeübten Druck. Die bei der Durchführung des erfindungsgemäßen Verfahrens erfasste Größe hinsichtlich der physikalischen Eigenschaft "Druck" ist die durch den Benutzer der Sitzvorrichtung beim Sitzen auf der Sitzvorrichtung auf die Sitzvorrichtung ausgeübte Höhe des Druck beziehungsweise die durch den Benutzer der Sitzvorrichtung beim Sitzen auf der Sitzvorrichtung auf die Sitzvorrichtung ausgeübte Änderung der Höhe des Drucks.

Bei der physikalischen Eigenschaft "Temperatur" handelt es sich um die durch den Benutzer der Sitzvorrichtung beim Sitzen auf der Sitzvorrichtung auf die Sitzvorrichtung einwirkende Temperatur. Die bei der Durchführung des erfindungsgemäßen Verfahrens erfasste Größe hinsichtlich der physikalischen Eigenschaft "Temperatur" ist die durch den Benutzer der Sitzvorrichtung beim Sitzen auf der Sitzvorrichtung auf die Sitzvorrichtung einwirkende Höhe der Temperatur beziehungsweise die durch den Benutzer der Sitzvorrichtung beim Sitzen auf der Sitzvorrichtung auf die Sitzvorrichtung bewirkte Änderung der Höhe der Temperatur.

Bei der physikalischen Eigenschaft "Abstand" handelt es sich um die durch den Benutzer der Sitzvorrichtung beim Sitzen auf der Sitzvorrichtung auf die Sitzvorrichtung erzeugte Abstandsänderung. Eine solche Abstandsänderung an der Sitzvorrichtung kann insbesondere aufgrund einer Stauchung beziehungsweise eines Zusammendrückens von elastischen Bereichen der Sitzvorrichtung, beispielsweise einer Polsterung, beispielsweise in Form von Schaumstoff, hervorgerufen werden. Die bei der Durchführung des erfindungsgemäßen Verfahrens erfasste Größe hinsichtlich der physikalischen Eigenschaft "Abstand" ist die durch den Benutzer der Sitzvorrichtung beim Sitzen auf der Sitzvorrichtung auf die Sitzvorrichtung bewirkte Höhe der Änderung des Abstands.

Bevorzugt wird bei der Durchführung des erfindungsgemäßen Verfahrens die Größe des Drucks beziehungsweise der Druckänderung erfasst, da diese besonders einfach und zuverlässig erfassbar ist.

Bevorzugt wird die Größe der physikalischen Eigenschaft jeweils durch Sensoren erfasst. Zur Erfassung von Druck können Drucksensoren, zur Erfassung von Temperatur können Temperatursensoren und zur Erfassung von Abstand können Abstandssensoren verwendet werden.

Zur Durchführung des erfindungsgemäßen Verfahrens können entsprechende Sensoren zur Verfügung gestellt werden.
Bei der Durchführung des erfindungsgemäßen Verfahrens können die physikalischen Eigenschaften durch die Sensoren jeweils als Messgröße quantitativ erfasst und in ein elektrisches Signal umgeformt werden. Insbesondere können die die Messgrößen in ein solches elektrisches Signal umgeformt werden, das durch eine elektronische Datenverarbeitungsvorrichtung auslesbar beziehungsweise verarbeitbar ist. Zur Durchführung des erfindungsgemäßen Verfahrens können entsprechend ausgebildete Sensoren zur Verfügung gestellt werden.

Erfindungsgemäß hat sich herausgestellt, dass insbesondere auf Basis von Größen physikalischer Eigenschaften, die eine Person beim Sitzen auf der Sitzvorrichtung an der Sitzfläche erzeugt, ein Wert bestimmbar ist, der besonders charakteristisch für eine bestimmte Sitzhaltung ist. Insoweit ist erfindungsgemäß bevorzugt vorgesehen, dass zumindest eine Anzahl der Bereiche an der Sitzfläche der Sitzvorrichtung vorgesehen sind, also die Größe einer durch den Benutzer veränderbaren Größe einer physikalischen Eigenschaft zumindest auch an wenigstens einem Bereich der Sitzfläche erfasst wird. Besonders bevorzugt wird die Größe an wenigstens drei Bereichen der Sitzfläche erfasst. Besonders bevorzugt wird die Größe jeweils wenigstens an den folgenden drei Bereichen der Sitzfläche erfasst: An einem Bereich, an dem das Gesäß eines Benutzers der Sitzvorrichtung beim Sitzen auf der Sitzvorrichtung aufliegt, an einem Bereich, an dem der linke Oberschenkel eines Benutzers der Sitzvorrichtung beim Sitzen auf der Sitzvorrichtung aufliegt und an einem Bereich, an dem der rechte Oberschenkel eines Benutzers der Sitzvorrichtung beim Sitzen auf der Sitzvorrichtung aufliegt.

Ferner hat sich erfindungsgemäß herausgestellt, dass auch auf Basis von Größen physikalischer Eigenschaften, die eine Person beim Sitzen auf der Sitzvorrichtung an der Rückenlehne erzeugt, ein Wert bestimmbar ist, der charakteristisch für eine bestimmte Sitzhaltung ist. Insoweit ist erfindungsgemäß bevorzugt vorgesehen, dass zumindest eine Anzahl der Bereiche an der Rückenlehne der Sitzvorrichtung vorgesehen sind, also die Größe einer durch den Benutzer veränderbaren Größe einer physikalischen Eigenschaft zumindest auch an wenigstens einem Bereich der Rückenlehne erfasst wird. Besonders bevorzugt wird die Größe an wenigstens drei Bereichen der Rückenlehne erfasst. Besonders bevorzugt wird die Größe jeweils wenigstens an den folgenden drei Bereichen der Rückenlehne erfasst: An einem Bereich, an dem der Rücken im Bereich der Wirbelsäule eines Benutzers der Sitzvorrichtung beim Sitzen auf der Sitzvorrichtung an der Rückenlehne anlehnt, an einem Bereich, an dem der Rücken im Bereich des linken Schulterblattes eines Benutzers der Sitzvorrichtung beim Sitzen auf der Sitzvorrichtung an der Rückenlehne anlehnt und an einem Bereich, an dem der Rücken im Bereich des rechten Schulterblattes eines Benutzers der Sitzvorrichtung beim Sitzen auf der Sitzvorrichtung an der Rückenlehne anlehnt.

Nach einer bevorzugten Ausführungsform wird bei der Durchführung des erfindungsgemäßen Verfahrens die Größe einer physikalischen Eigenschaft wenigstens an den vorbezeichneten Bereichen der Sitzfläche und der Rückenlehne jeweils erfasst.

Zur Durchführung des erfindungsgemäßen Verfahrens kann eine Sitzvorrichtung zur Verfügung gestellt werden, bei der die Größe der physikalischen Eigenschaft an den vorbezeichneten Bereichen jeweils erfassbar ist, also insbesondere an diesen Bereichen jeweils durch Sensoren erfassbar ist.

Der Wert auf Basis der erfassten Größen kann bevorzugt durch eine oder mehrere definierte, also vorgegebene mathematische Rechenoperationen beziehungsweise durch einen definierten Algorithmus bestimmt werden.

Nach der Erfindung wird der Wert bestimmt als ein Quotient aus den erfassten Größen. Der besondere Vorteil eines Wertes, der als Quotient auf Basis der erfassten Größen bestimmt worden ist, liegt insbesondere darin, dass ein solcher Quotient unabhängig von der jeweils absoluten erfassten Größe der physikalischen Eigenschaften ist. Da der Wert als Quotient auf Basis der erfassten Größen bestimmt wird, ist durch das erfindungsgemäße Verfahren die Feststellung der Sitzhaltung des Benutzers der Sitzvorrichtung besonders einfach möglich, ohne hierfür individuelle Daten über den jeweiligen Benutzer der Sitzvorrichtung erfassen oder zur Verfügung stellen zu müssen.

Nach einer Ausführungsform kann zur Bestimmung des Wertes beispielsweise vorgesehen sein, eine erste Summe aus erfassten Größen einer ersten Anzahl eines oder mehrerer definierter Bereiche gebildet wird und ferner eine zweite Summe aus erfassten Größen einer zweiten Anzahl eines oder mehrerer definierter Bereiche gebildet wird. Die Bereiche der ersten Anzahl und zweiten Anzahl sind dabei nicht gleich. Zur Bestimmung des Wertes kann anschließend der Quotient aus der ersten und zweiten Summe gebildet werden. Der danach bestimmte Wert kann insbesondere charakteristisch sein in Hinblick auf eine Sitzhaltung des Benutzers, die je nach Sitzhaltung mehr die Größe der physikalischen Eigenschaft an den Bereichen der ersten Anzahl von Bereichen oder mehr die Größe der physikalischen Eigenschaft an den Bereichen der zweiten Anzahl von Bereichen ändert.

Nach einer Ausführungsform ist vorgesehen, dass die durch die Sensoren jeweils erfasste Größe einer physikalischen Eigenschaft an eine elektronische Datenverarbeitungsvorrichtung übertragen wird.

Insbesondere kann vorgesehen sein, dass die durch die Sensoren erfassten Größen jeweils durch Übertragungsmittel, insbesondere elektronische Übertragungsmittel an eine Datenverarbeitungsvorrichtung übertragen werden. Insofern kann vorgesehen sein, dass zur Durchführung des erfindungsgemäßen Verfahrens Übertragungsmittel zur Verfügung gestellt werden, durch die die durch die Sensoren jeweils erfasste Größe einer physikalischen Eigenschaft an eine elektronische Datenverarbeitungsvorrichtung übertragbar ist. Bei diesen Übertragungsmitteln kann es sich beispielsweise um Datenkabel oder Funkübertragungsmittel handeln. Funkübertragungsmittel können beispielsweise in Form einer Schnittstelle in Form von Bluetooth oder Infrarot vorgesehen sein.

Der Wert kann bei der Durchführung des erfindungsgemäßen Verfahrens bevorzugt durch eine elektronische Datenverarbeitungsvorrichtung auf Basis der erfassten Größen bestimmt werden.

Zur Durchführung des erfindungsgemäßen Verfahrens kann daher eine elektronische Datenverarbeitungsvorrichtung zur Verfügung gestellt werden, durch die der Wert auf Basis der erfassten Größen bestimmbar ist. Insbesondere können die durch die Sensoren jeweils erfassten Größen einer physikalischen Eigenschaft, insbesondere auch über die vorbezeichneten Übertragungsmittel, an diese elektronische Datenverarbeitungsvorrichtung übertragen werden.

Die elektronische Datenverarbeitungsvorrichtung ist derart ausgebildet, dass durch diese die an sie übertragenen jeweils erfassten Größen einer physikalischen Eigenschaft erfassbar und verarbeitbar sind. Ferner ist die elektronische Datenverarbeitungsvorrichtung derart ausgebildet, dass durch diese der Wert auf Basis der erfassten Größen bestimmbar ist. Hierzu kann die elektronische Datenverarbeitungsvorrichtung beispielsweise derart programmiert sein, dass durch diese der Wert auf Basis der erfassten Größen bestimmbar beziehungsweise berechenbar ist. Hierzu kann die elektronische Datenverarbeitungsvorrichtung insbesondere derart programmiert sein, dass durch diese der Wert auf Basis der erfassten Größen durch eine oder mehrere definierte mathematische Rechenoperationen beziehungsweise durch einen definierten Algorithmus bestimmt wird.

Die Feststellung der Sitzhaltung des Benutzers unter Verwendung des bestimmten Wertes kann bevorzugt durch Vergleich des Wertes mit wenigstens einem vorgegebenen Wert erfolgen.

Der wenigstens eine vorgegebene Wert kann in Form eines oder mehrerer konkreter Werte oder in Form eines oder mehrerer Wertebereiche, also Intervallen von Werten vorliegen. Bei diesen vorgegebenen Werten kann es sich insbesondere um Werte handeln, die aufgrund empirischer Daten festgelegt sind. Insbesondere können die vorgegebenen Werte dadurch empirisch ermittelt werden, dass gemäß dem erfindungsgemäßen Verfahren zunächst ein Wert bestimmt wird, während ein Benutzer eine bestimmte Sitzhaltung auf der Sitzvorrichtung einnimmt. Der danach bestimmte Wert ist somit charakteristisch für diese Sitzhaltung. Erfindungsgemäß kann dieser bestimmte Wert nunmehr als vorgegebener Wert für das erfindungsgemäße Verfahren zur Verfügung gestellt werden. Insbesondere kann vorgesehen sein, dass die Sitzhaltung des Benutzers in Abhängigkeit davon festgestellt wird, ob der Wert wenigstens einem solchen vorgegebenen Wert entspricht. Denn wenn der bestimmte Wert dem vorgegebenen Wert entspricht, ist hierdurch indiziert, dass der Benutzer wieder die gleiche Sitzhaltung einnimmt, die er auch eingenommen hatte, als der vorgegebene Wert, wie oben ausgeführt, empirisch ermittelt worden war.

Jeder der vorgegebenen Werte definiert daher eine bestimmte Sitzhaltung, also eine Sitzhaltung, die vorliegt, wenn dieser vorgegebene Wert bei Durchführung des erfindungsgemäßen Verfahrens bestimmt wird.

Für mehrere verschiedene Sitzhaltungen können daher jeweils ein oder mehrere Werte festgelegt werden. Die Sitzhaltung eines Benutzers kann entsprechend den jeweiligen festgelegten Werten festgestellt werden.

Es kann vorgesehen sein, dass der wenigstens eine vorgegebene Wert in einem elektronischen Datenspeicher gespeichert ist. Ferner kann vorgesehen sein, dass der wenigstens eine vorgegebene Wert durch die elektronische Datenverarbeitungsvorichtung aus dem elektronischen Datenspeicher ausgelesen wird und die Sitzhaltung des Benutzers in Abhängigkeit davon feststellt, ob der Wert wenigstens einem der vorgegebenen Werte entspricht. Zur Durchführung des erfindungsgemäßen Verfahrens kann entsprechend ein elektronischer Datenspeicher zur Verfügung gestellt werden, in dem der wenigstens eine vorgegebene Wert gespeichert ist. Ferner kann zur Durchführung des erfindungsgemäßen Verfahrens demnach eine elektronische Datenverarbeitungsvorrichtung zur Verfügung gestellt werden, durch die der im elektronischen Datenspeicher zur Verfügung gestellte wenigstens eine vorgegebene Wert auslesbar ist und die Sitzhaltung des Benutzers in Abhängigkeit davon feststellbar ist, ob der Wert wenigstens einem der vorgegebenen Werte entspricht.

Entspricht der Wert dem vorgegebenen Wert oder wenigstens einem der vorgegebenen Werte, ist danach eine Sitzhaltung festgestellt. Insoweit ist die Sitzhaltung festgestellt, die der Sitzhaltung gemäß dem vorgegebenen Wert entspricht beziehungsweise die für den vorgegebenen Wert definiert ist. Handelt es sich bei der für den vorgegebenen Wert beispielsweise um eine gute, also insbesondere eine ergonomisch günstige Sitzhaltung, kann insoweit beispielsweise, insbesondere durch die elektronische Datenverarbeitungsvorrichtung, die Sitzhaltung als "gut" festgestellt werden. Ergibt der Vergleich des Wertes mit dem vorgegebenen Wert, dass dieser dem vorgegebenen Wert nicht entspricht, kann die Sitzhaltung als "nicht gut" festgestellt werden.

Falls für den vorgegebenen Wert beispielsweise eine ergonomisch ungünstige Sitzhaltung definiert ist, kann bei Feststellung, dass der bestimmte Wert dem vorgegebenen Wert entspricht, die Sitzhaltung als "nicht gut", ansonsten als "gut" festgestellt werden.

Nach einer bevorzugten Ausführungsform ist vorgesehen, dass das Verfahren synchron zur Feststellung unterschiedlicher Sitzhaltungen durchgeführt wird. Insbesondere kann vorgesehen sein, dass das erfindungsgemäße Verfahren durch die Verfügungstellung und den Einsatz der vorbezeichneten Komponenten, also insbesondere der elektronischen Datenverarbeitungsvorrichtung, Sensoren, Übertragungsmittel und elektronischen Datenspeicher, synchron zur Feststellung unterschiedlicher Sitzhaltungen durchgeführt wird. Für jede dieser Sitzhaltungen kann beispielsweise jeweils, wie zuvor ausgeführt, eine erste Summe aus erfassten Größen einer ersten Anzahl eines oder mehrerer (für die Feststellung der jeweiligen Sitzhaltungen) definierter Bereiche gebildet werden und ferner eine zweite Summe aus erfassten Größen einer zweiten Anzahl eines oder mehrerer (für die Feststellung der jeweiligen Sitzhaltungen) definierter Bereich gebildet werden. Wie zuvor ausgeführt, kann zur Bestimmung des Wertes anschließend der Quotient aus dieser ersten und zweiten Summe gebildet werden. Der danach bestimmte Wert, kann wie oben, charakteristisch sein in Hinblick auf die jeweils festzustellende Sitzhaltung des Benutzers und daher, wie hierin ausgeführt, mit einem für die entsprechende Sitzhaltung charakteristischen, vorgegebenen Wert verglichen und, wie hierin ausgeführt, die jeweilige Sitzhaltung festgestellt werden.

Bei der für die Durchführung des erfindungsgemäßen Verfahrens zur Verfügung gestellten elektronischen Datenverarbeitungsvorrichtung kann es sich grundsätzlich um eine beliebige elektronische Datenverarbeitungsvorrichtung handeln, beispielsweise um einen Computer, einen Mikrocontroller oder eine elektronische Datenverarbeitungsvorrichtung in Form eines tragbaren Kommunikationsmittels, beispielsweise in Form eines Smartphones. Bevorzugt wird für die Durchführung des erfindungsgemäßen Verfahrens nur eine einzige elektronische Datenverarbeitungsvorrichtung zur Verfügung gestellt. Bestandteil dieser elektronischen Datenverarbeitungsvorrichtung kann insbesondere auch wenigstens ein elektronischer Datenspeicher sein, in dem insbesondere der wenigstens eine vorgegebene Wert gespeichert sein kann.

Zur Überprüfung beziehungsweise Überwachung der durch das erfindungsgemäße Verfahren festgestellten Sitzhaltung kann bevorzugt vorgesehen sein, dass die festgestellte Sitzhaltung an eine Person übermittelt wird, beispielsweise an den Benutzer der Sitzvorrichtung oder eine sonstige Person. Hierzu kann beispielsweise ein Informationsmittel, insbesondere ein elektronisches Informationsmittel, zur Verfügung gestellt werden, an das die festgestellte Sitzposition übertragen werden kann. Bei diesem Informationsmittel kann es sich beispielsweise um ein elektronisches Informationsmittel, wie beispielsweise ein Display, ein Monitor oder ein tragbares elektronisches Telekommunikationsmittel handeln, beispielsweise ein Smartphone. Die Information über die festgestellte Sitzhaltung kann durch das Informationsmittel grundsätzlich auf beliebige Art und Weise an den Benutzer oder eine sonstige Person übermittelt werden, beispielsweise durch Audiosignale, visuelle Signale oder audiovisuelle Signale. Insofern kann das Informationsmittel zur Wiedergabe der festgestellten Sitzhaltung durch Audiosignale, visuelle Signale oder audiovisuelle Signale ausgebildet sein. Beispielsweise kann das Informationsmittel auch zur Speicherung der übermittelten Sitzhaltung ausgebildet sein, beispielsweise durch einen elektronischen Datenspeicher, der beispielsweise Bestandteil eines tragbaren Kommunikationsmittels, insbesondere in Form eines Smartphones sein kann.

Die festgestellte Sitzhaltung kann insbesondere von der elektronischen Datenverarbeitungsvorrichtung an das Informationsmittel übermittelt werden, insbesondere durch Übertragungsmittel. Insofern können zur Durchführung des erfindungsgemäßen Verfahrens Übertragungsmittel zur Verfügung gestellt werden, durch die die von der elektronischen Datenverarbeitungsvorrichtung festgestellte Sitzhaltung an das Informationsmittel übertragbar ist. Bei diesen Übertragungsmitteln kann es sich beispielsweise um Datenkabel oder Funkübertragungsmittel handeln. Funkübertragungsmittel können beispielsweise in Form einer Schnittstelle in Form von Bluetooth oder Infrarot vorgesehen sein.

Nach einer Ausführungsform ist vorgesehen, dass eine durch die elektronische Datenverarbeitungsvorrichtung festgestellte Sitzhaltung in Abhängigkeit von der Dauer und/oder Häufigkeit der festgestellten Sitzhaltung an das Informationsmittel übermittelt wird. Beispielsweise kann vorgesehen sein, dass die festgestellte Sitzhaltung nur dann an das Informationsmittel übermittelt wird, wenn die festgestellte Sitzhaltung wenigstens für einen definierten Zeitraum festgestellt wird. Alternativ kann beispielsweise vorgesehen sein, dass die Feststellung der Sitzhaltung durch die elektronische Datenverarbeitungsvorrichtung getriggert, also in definierten Zeitabständen durchgeführt wird. Dabei kann ferner vorgesehen sein, dass eine festgestellte Sitzhaltung nur dann an das Informationsmittel übermittelt wird, wenn sie in einer definierten Anzahl getriggert aufeinander folgender Durchführungen des Verfahrens festgestellt worden ist. Diese mögliche Mitteilung der festgestellten Sitzhaltung an das Informationsmittel in Abhängigkeit von der Dauer oder Häufigkeit der festgestellten Sitzhaltung kann insbesondere dazu dienen, nicht stets bereits dann eine durch den Benutzer eingenommene und festgestellte Sitzhaltung an das Informationsmittel zu übermitteln, wenn diese Sitzhaltung nur für einen kurzen Zeitraum vom Benutzer eingenommen worden ist.

Weitere Merkmale der Erfindung ergeben sich aus den Ansprüchen, des in den Figuren dargestellten Ausführungsbeispiels der Erfindung sowie der zugehörigen Figurenbeschreibung.

Ein Ausführungsbeispiel der Erfindung wird nachfolgend näher erläutert.

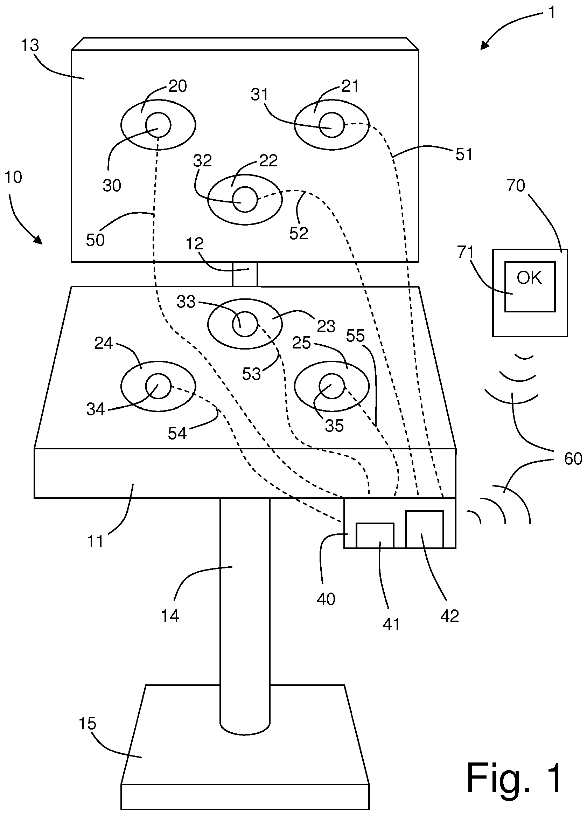

In den Figuren zeigt
- Figur 1: eine Vorrichtung zur Durchführung des erfindungsgemäßen Verfahrens in einer perspektivischen Ansicht von schräg oben.

Die in Figur 1 dargestellte Vorrichtung ist in ihrer Gesamtheit mit dem Bezugszeichen 1 gekennzeichnet. Die Vorrichtung 1 ist allein schematisch dargestellt und zur Durchführung von beispielhaften Ausführungsformen des erfindungsgemäßen Verfahrens ausgebildet. Die Vorrichtung 1 umfasst im Ausführungsbeispiel gemäß Figur 1 eine Sitzvorrichtung in Form eines Drehstuhles 10. Der Drehstuhl 10 umfasst eine im Wesentlichen horizontal ausgerichtete Sitzfläche 11 und eine über einen Winkel 12 daran befestigte, im Wesentlichen vertikal ausgerichtete Rückenlehne 13. Wie aus dem Stand der Technik bekannt, bestehen die Sitzfläche 11 sowie die Rückenlehne 13 jeweils aus einer festen Unterkonstruktion, auf der jeweils eine mit einem Stoff überzogene Polsterung angeordnet ist.

Die Sitzfläche 11 ist drehbar an einer auf einem Fußteil 15 befestigten Säule 14 angeordnet.

An sechs Bereichen 20, 21, 22, 23, 24, 25 der Sitzvorrichtung 10 ist jeweils ein Drucksensor 30, 31, 32, 33, 34, 35 angeordnet. An den Bereichen 20, 21, 22, 23, 24, 25 kann ein Benutzer der Sitzvorrichtung 10 beim Sitzen auf der Sitzvorrichtung 10 jeweils Druck auf die Sitzvorrichtung 10 ausüben. Konkret handelt es sich bei den Bereichen 20, 21, 22, 23, 24, 25 um drei Bereiche 20, 21, 22 im Bereich der Rückenlehne 13 und drei Bereiche 23, 24, 25 im Bereich der Sitzfläche 11. Bei einem Bereich der Rückenlehne 13 handelt es sich um einen Bereich 22, an dem der Rücken eines Benutzers der Sitzvorrichtung 10 im Bereich seiner Wirbelsäule an der Rückenlehne 13 anlehnt, um einen Bereich 20, an dem der Rücken des Benutzers im Bereich seines rechten Schulterblattes an der Rückenlehne 13 anlehnt und um einen Bereich 21, an dem der Rücken des Benutzers im Bereich seines linken Schulterblattes an der Rückenlehne 13 anlehnt. Im Bereich der Sitzfläche 11 handelt es sich um die folgenden drei Bereiche: Einen Bereich 23, an dem das Gesäß des Benutzers auf der Sitzfläche 11 aufliegt, einen Bereich 24, an dem der rechte Oberschenkel des Benutzers auf der Sitzfläche 11 aufliegt und einen Bereich 25, an dem der linke Oberschenkel des Benutzers auf der Sitzfläche 11 aufliegt.

Die Sensoren 30, 31, 32, 33, 34, 35 sind jeweils derart ausgebildet, dass durch diese der Druck, der auf die Bereiche 20, 21, 22, 23, 24, 25 jeweils durch einen Benutzer der Sitzvorrichtung 10 ausgeübt wird, der Größe nach erfassbar ist.

Die Vorrichtung 1 umfasst ferner eine elektronische Datenverarbeitungsvorrichtung 40 in Form eines Mikrocontrollers, der unterseitig der Sitzfläche 11 an der Sitzvorrichtung 10 angeordnet ist. Der Mikrocontroller 40 umfasst einen Prozessor 41 und einen elektronischen Datenspeicher 42.

Die Vorrichtung 1 umfasst ferner Übertragungsmittel in Form von Datenkabeln 50, 51, 52, 53, 54, 55, wobei durch jedes Datenkabel 50, 51, 52, 53, 54, 55 jeweils die durch einen Drucksensor 30, 31, 32, 33, 34, 35 erfasste Größe des Drucks an den Mikrocontroller 40 übertragbar ist.

In dem elektronischen Datenspeicher 42 des Mikrocontrollers 40 sind vorgegebene Werte, die jeweils eine Sitzhaltung definieren, gespeichert.

Der Mikrocontroller 40 ist derart eingerichtet, dass durch diesen die durch die Übertragungsmittel 50, 51, 52, 53, 54, 55 an den Mikrocontroller 40 übertragenen Druckhöhen erfassbar und durch den Prozessor 41 verarbeitbar sind. Ferner ist der Mikrocontroller 40 derart ausgebildet, dass durch diesen die vorgegebenen Werte aus dem elektronischen Datenspeicher 42 auslesbar sind. Ferner ist der Mikrocontroller 40 derart eingerichtet, dass durch diesen ein Wert auf Basis der erfassten Druckgrößen bestimmbar ist. Hierzu ist der Mikrocontroller 40 derart programmiert, dass dieser den Wert nach einem vorgegebenen Algorithmus bestimmt, also berechnet. Ferner ist der Mikrocontroller 40 derart eingerichtet, dass durch diesen bestimmbar beziehungsweise berechenbar ist, ob der bestimmte Wert wenigstens einem der vorgegebenen Werte entspricht. Hierzu ist der Mikrocontroller 40 derart programmiert, dass dieser nach einem vorgegebenen Algorithmus feststellt, ob der bestimmte Wert einem bestimmten vorgegebenen Wert entspricht. Ferner ist der Mikrocontroller 40 derart programmiert, dass dieser eine Sitzhaltung in Abhängigkeit davon feststellt, ob der bestimmte Wert dem vorgegebenen Wert entspricht.

Die Vorrichtung 1 umfasst ferner ein Übertragungsmittel 60 in Form einer Bluetooth-Schnittstelle, durch welche die vom Mikrocontroller 40 festgestellte Sitzhaltung an ein Smartphone 70 übertragbar ist.

Das Smartphone 70 ist derart ausgebildet, dass an diesem die durch den Mikrocontroller 40 festgestellte und über die Bluetooth-Schnittstelle 60 an das Smartphone 70 übermittelte Sitzhaltung auf dem Display 71 des Smartphone 70 darstellbar ist.

Durch die Vorrichtung 1 ist ein erfindungsgemäßes Verfahren zur Feststellung verschiedenster Sitzhaltungen eines Benutzers der Sitzvorrichtung 10 durchführbar.

Ein Verfahren zur Feststellung einer nach vorne oder hinten gebeugten, ergonomisch ungünstigen Sitzhaltung eines Benutzers der Sitzvorrichtung 10 ist beispielsweise wie folgt durchführbar.

So wurde zunächst empirisch ermittelt, dass eine nach vorne oder hinten gebeugte Sitzhaltung charakterisiert sein kann durch einen Quotienten aus der Summe der erfassten Druckhöhen an den Bereichen 24 und 25 zur Druckhöhe am Bereich 23. Konkret wurde empirisch festgestellt, dass eine nicht nach vorne oder hinten gebeugte Sitzhaltung, ergonomisch insoweit also günstige Sitzhaltung vorliegt, wenn der Quotient aus der Summe der Druckhöhen an den Bereichen 24 und 25 zur Druckhöhe am Bereich 23 innerhalb eines Wertebereiches von 1 bis 2 liegt. Dieser Wertebereich von 1 bis 2 wird als vorgegebener Wert im elektronischen Datenspeicher 42 gespeichert.

Sobald ein Benutzer der Sitzvorrichtung 10 auf dieser Platz genommen hat, werden an den Bereichen 23, 24, 25 durch die Sensoren 33, 34, 35 die Druckhöhen an diesen Bereichen 23, 24, 25 erfasst, diese Größen (also die erfassten Druckhöhen) über die Datenleitungen 53, 54, 55 an den Mikrocontroller 40 weitergeleitet und die insoweit übermittelten Größen vom Mikrocontroller 40 erfasst.

Der Mikrocontroller 40 ist derart programmiert, dass er die Summe aus den von den Drucksensoren 34, 35 übermittelten Größen bildet und durch die vom Drucksensor 33 übermittelte Größe teilt, also den Quotienten aus der Summe dieser übermittelten Druckhöhen bestimmt beziehungsweise berechnet. Das Ergebnis dieser Berechnung liegt anschließend als insoweit bestimmter Wert vor. Ferner ist der Mikrocontroller 40 derart programmiert, dass es den vorgegebenen Wert aus dem elektronischen Datenspeicher 42 ausliest und mit diesem bestimmten Wert vergleicht. Stellt der Mikrocontroller 40 dabei fest, dass der bestimmte Wert außerhalb des vorgegebenen Wertebereiches von 1 bis 2 liegt, hat der Mikrocontroller 40 einer Sitzhaltung dahingehend festgestellt, dass eine nach vorne oder hinten gebeugte Sitzhaltung vorliegt, die ergonomisch ungünstig für den Benutzer ist. Der Mikrocontroller 40 ist dabei derart eingerichtet, dass er über die Bluetooth-Schnittstelle 60 eine Nachricht an das Smartphone 70 übermittelt, wenn eine solche ergonomisch ungünstige Sitzhaltung festgestellt worden ist. Das Smartphone 70 ist dabei derart eingerichtet, dass diese übermittelte Nachricht über eine ungünstige Sitzhaltung auf dem Display 71 dargestellt wird. Diese auf dem Display 71 dargestellte Nachricht über die ergonomisch ungünstige Sitzhaltung ist vom Benutzer der Sitzvorrichtung oder eine sonstige Person ablesbar, so dass als Reaktion hierauf die Sitzhaltung des Benutzers in eine ergonomisch günstige Sitzhaltung korrigiert werden kann.

Gemäß einem Beispiel berechnet der Microcontroller 40 die Summe aus den von den Drucksensoren 34, 35 übermittelten Größen als "5" und teilt diese Summe durch die vom Sensor 33 übermittelte Größe "2", berechnet also den Quotienten der Summe der von den Drucksensoren 34, 35 übermittelten Größen und der vom Sensor 33 übermittelte Größe. Das Ergebnis dieser Berechnung liegt anschließend als insoweit bestimmter Wert vor, im Beispiel also als Wert "2,5". Anschließend vergleicht der Mikrocontroller 40 den aus dem elektronischen Datenspeicher 42 vorgegebenen Wert in Form des Wertebereiches "1 bis 2" mit dem bestimmten Wert "2,5". Dabei stellt der Mikrocontroller 40 eine Abweichung fest, da der Wert 2,5 nicht innerhalb des Wertebereiches von 1 bis 2 liegt. Der Mikrocontroller 40 sendet daher über die Bluetooth-Schnittstelle 60 eine Nachricht an das Smartphone 70, auf dessen Display 71 diese Feststellung über die ergonomisch ungünstige Sitzhaltung dann dargestellt wird.

Alternativ kann die Vorrichtung 1 beispielsweise zur Feststellung einer im Oberkörper zu stark nach rechts gedrehten, ergonomisch ungünstigen Sitzhaltung eines Benutzers der Sitzvorrichtung 10 dienen.

So wurde zunächst empirisch ermittelt, dass eine nach rechts gedrehte Sitzhaltung charakterisiert sein kann durch einen Quotienten aus der Summe der erfassten Druckhöhen an den Bereichen 21 und 22 zur Druckhöhe am Bereich 20. Konkret wurde empirisch festgestellt, dass eine nicht nach rechts gedrehte Sitzhaltung, ergonomisch insoweit also günstige Sitzhaltung vorliegt, wenn der Quotient aus der Summe der Druckhöhen an den Bereichen 21 und 22 zur Druckhöhe am Bereich 20 innerhalb eines Wertebereiches von 2 bis 4 liegt. Dieser Wertebereich von 2 bis 4 wird als vorgegebener Wert im elektronischen Datenspeicher 42 gespeichert.

Sobald ein Benutzer der Sitzvorrichtung 10 auf dieser Platz genommen hat, werden an den Bereichen 20, 21, 22 durch die Sensoren 30, 31, 32 die Druckhöhen an diesen Bereichen 20, 21, 22 erfasst, diese Größen (also die erfassten Druckhöhen) über die Datenleitungen 50, 51, 52 an den Mikrocontroller 40 weitergeleitet und die insoweit übermittelten Größen vom Mikrocontroller 40 erfasst.

Der Mikrocontroller 40 ist derart programmiert, dass er die Summe aus den von den Drucksensoren 51, 52 übermittelten Größen bildet und durch die vom Sensor 53 übermittelte Größe teilt, also den Quotienten aus der Summe dieser übermittelten Druckhöhen bestimmt beziehungsweise berechnet. Das Ergebnis dieser Berechnung liegt anschließend als insoweit bestimmter Wert vor. Ferner ist der Mikrocontroller 40 derart programmiert, dass es den vorgegebenen Wert aus dem elektronischen Datenspeicher 42 ausliest und mit diesem bestimmten Wert vergleicht. Stellt der Mikrocontroller 40 dabei fest, dass der bestimmte Wert außerhalb des vorgegebenen Wertebereiches von 2 bis 4 liegt, hat der Mikrocontroller 40 einer Sitzhaltung dahingehend festgestellt, dass eine im Oberkörper zu stark nach rechts gedrehten Sitzhaltung vorliegt, die ergonomisch ungünstig für den Benutzer ist. Der Mikrocontroller 40 ist dabei wiederum derart eingerichtet, dass er über die Bluetooth-Schnittstelle 60 eine Nachricht an das Smartphone 70 übermittelt, wenn eine solche ergonomisch ungünstige Sitzhaltung festgestellt worden ist und das Smartphone 70 diese übermittelte Nachricht wiederum auf dem Display 71 darstellt.

Entsprechend können verschiedenste Sitzhaltungen durch die Vorrichtung 1 mittels des erfindungsgemäßen Verfahrens festgestellt werden.

Bevorzugt können diese Verfahren synchron durch die Vorrichtung 1 durchgeführt werden, so dass jederzeit auf dem Display 71 irgendeine vom Mikrocontroller 40 als ungünstig festgestellte Sitzposition vom Display 71 abgelesen werden kann.

## Patentansprüche

1. Verfahren zur Feststellung der Sitzhaltung des Benutzers einer Sitzvorrichtung auf der Sitzvorrichtung, welches Folgendes umfasst:
1.1 Erfassung der Größe einer physikalischen Eigenschaft an jedem Bereich einer Mehrzahl von Bereichen der Sitzvorrichtung, an denen diese Größe durch den Benutzer der Sitzvorrichtung beim Sitzen auf der Sitzvorrichtung veränderbar ist;
1.2 Bestimmung eines Wertes auf Basis der erfassten Größen;
1.3 Feststellung der Sitzhaltung des Benutzers unter Verwendung des Wertes; **dadurch gekennzeichnet, dass**
1.4 der Wert bestimmt wird als ein Quotient der erfassten Größen.

2. Verfahren nach Anspruch 1, bei dem die physikalische Eigenschaft Druck erfasst wird.

3. Verfahren nach wenigstens einem der vorhergehenden Ansprüche, bei dem die Größe der physikalischen Eigenschaft jeweils durch Sensoren erfasst wird.

4. Verfahren nach wenigstens einem der vorhergehenden Ansprüche mit zumindest einer Anzahl der Bereiche an der Sitzfläche der Sitzvorrichtung.

5. Verfahren nach wenigstens einem der vorhergehenden Ansprüche mit zumindest einer Anzahl der Bereiche an der Rückenlehne der Sitzvorrichtung.

6. Verfahren nach Anspruch 3, bei dem die durch die Sensoren jeweils erfasste Größe an eine elektronische Datenverarbeitungsvorrichtung übertragen wird.

7. Verfahren nach Anspruch 6, bei dem der Wert durch die elektronische Datenverarbeitungsvorrichtung bestimmt wird.

8. Verfahren nach wenigstens einem der vorhergehenden Ansprüche, bei dem die Sitzhaltung des Benutzers durch Vergleich des Wertes mit wenigstens einem vorgegebenen Wert festgestellt wird.

9. Verfahren nach wenigstens einem der vorhergehenden Ansprüche, bei dem die Sitzhaltung des Benutzers in Abhängigkeit davon festgestellt wird, ob der Wert wenigstens einem vorgegebenen Wert entspricht.

10. Verfahren nach Anspruch 7 und 9, bei dem der wenigstens eine vorgegebene Wert in einem elektronischen Datenspeicher gespeichert ist, durch die elektronische Datenverarbeitungsvorrichtung aus dem elektronischen Datenspeicher ausgelesen wird und die elektronische Datenverarbeitungsvorrichtung die Sitzhaltung des Benutzers in Abhängigkeit davon feststellt, ob der Wert wenigstens einem der vorgegebenen Werte entspricht.

11. Verfahren nach Anspruch 10, bei dem die elektronische Datenverarbeitungsvorrichtung in Abhängigkeit von der durch die elektronische Datenverarbeitungsvorrichtung festgestellten Sitzhaltung eine Mitteilung an ein Informationsmittel übermittelt.

## Claims

1. A method for determining the sitting posture of the user of a seating device on the seating device, which comprises the following:
1.1 detection of the variable of a physical property at each region of a plurality of regions of the seating device at which regions this variable is changeable by the user of the seating device when sitting on the seating device;
1.2 determination of a value based on the variables detected;
1.3 determination of the sitting posture of the user by using the value; **characterized in that**
1.4 the value is determined as a quotient of the variables detected.

2. The method according to claim 1, in which the physical property of pressure is detected.

3. The method according to at least one of the preceding claims, in which the variable of the physical property is respectively detected by sensors.

4. The method according to at least one of the preceding claims, with at least a plurality of the regions on the seating surface of the seating device.

5. The method according to at least one of the preceding claims, with at least a plurality of the regions on the backrest of the seating device.

6. The method according to claim 3, in which the variable respectively detected by the sensors is transmitted to an electronic data processing device.

7. The method according to claim 6, in which the value is determined by the electronic data processing device.

8. The method according to at least one of the preceding claims, in which the sitting posture of the user is determined by comparing the value with at least one predetermined value.

9. The method according to at least one of the preceding claims, in which the sitting posture of the user is determined depending on whether the value corresponds to at least one predetermined value.

10. The method according to claim 7 and 9, in which the at least one predetermined value is stored in an electronic data memory, is read from the electronic data memory by the electronic data processing device, and the electronic data processing device determines the sitting posture of the user depending on whether the value corresponds to at least one of the predetermined values.

11. The method according to claim 10, in which the electronic data processing device transmits a communication to an information means depending on the sitting posture determined by the electronic data processing device.

## Revendications

1. Procédé pour constater la posture d'assise de l'utilisateur d'un dispositif de siège sur le dispositif de siège, lequel comprend ce qui suit :
1.1 la détection de la grandeur d'une propriété physique au niveau de chaque zone d'une pluralité de zones du dispositif de siège au niveau desquelles cette grandeur peut varier du fait de l'utilisateur du dispositif de siège lors de l'assise sur le dispositif de siège ;
1.2 la détermination d'une valeur sur la base des grandeurs détectées ;
1.3 le constat de la posture d'assise de l'utilisateur en utilisant la valeur ; **caractérisé en ce que**
1.4 la valeur est déterminée en tant qu'un quotient des grandeurs détectées.

2. Procédé selon la revendication 1, dans lequel on détecte la propriété physique de pression.

3. Procédé selon l'une au moins des revendications précédentes, dans lequel la grandeur de la propriété physique est respectivement détectée par des capteurs.

4. Procédé selon l'une au moins des revendications précédentes, avec au moins un certain nombre des zones au niveau de la surface d'assise du dispositif de siège.

5. Procédé selon l'une au moins des revendications précédentes, avec au moins un certain nombre des zones au niveau du dossier du dispositif de siège.

6. Procédé selon la revendication 3, dans lequel la grandeur respectivement détectée par les capteurs est transmise à un dispositif électronique de traitement de données.

7. Procédé selon la revendication 6, dans lequel la valeur est déterminée par le dispositif électronique de traitement de données.

8. Procédé selon l'une au moins des revendications précédentes, dans lequel la posture d'assise de l'utilisateur est constatée par comparaison de la valeur avec au moins une valeur prescrite.

9. Procédé selon l'une au moins des revendications précédentes, dans lequel la posture d'assise de l'utilisateur est constatée en fonction du fait que la valeur correspond à au moins une valeur prescrite.

10. Procédé selon les revendications 7 et 9, dans lequel l'au moins une valeur prescrite est enregistrée dans une mémoire de données électronique, est extraite de la mémoire de données électronique par le dispositif électronique de traitement de données, et le dispositif électronique de traitement de données constate la posture d'assise de l'utilisateur en fonction du fait que la valeur correspond à au moins l'une des valeurs prescrites.

11. Procédé selon la revendication 10, dans lequel le dispositif électronique de traitement de données transmet, en fonction de la posture d'assise constatée par le dispositif électronique de traitement de données, un message à un moyen d'information.
